# EUROPÄISCHE PATENTANMELDUNG

(11) **EP 2 597 073 A1**
(43) Veröffentlichungstag der Anmeldung: **29.05.2013**
(21) Anmeldenummer: 11190174.0
(22) Anmeldetag: 22.11.2011
(51) Int. Cl.: C04B 14/30, C04B 20/10, C04B 28/04, C04B 40/00

(54) **Titandioxid und Flugasche enthaltende Baustoffmischung sowie ein Verfahren zu deren Herstellung und deren Verwendung**

(71) Anmelder: Steag Power Minerals GmbH, 46535 Dinslaken (DE); KRONOS INTERNATIONAL, INC., 51373 Leverkusen (DE)
(72) Erfinder: Krohm, Werner, 44369 Dortmund (DE); Bender, Jürgen, 40789 Monheim (DE); Scheidt, Christian, 40479 Düsseldorf (DE)
(74) Vertreter: Zenz

(57) **Zusammenfassung**

Eine photokatalytische Baustoffmischung sowie ein Verfahren zu ihrer Herstellung wird offenbart. Die photokatalytische Baustoffmischung ist eine Trockenmischung aus einem feinteiligen Photokatalysator und einem puzzolanischen Träger. Der Träger hat eine kugelige oder gerundete Kornform mit einer Korngröße zwischen 0,1 µm und 1 mm. Der Photokatalysator ist wenigstens teilweise auf der Oberfläche des Trägers verteilt. Dies wird erreicht, indem die Trockenmischung mit einem Intensivtrockenmischer erstellt wird.

Durch die kugelige oder gerundete Kornform des Trägermaterials wird eine verbesserte Verdichtbarkeit und eine Verbesserung weiterer Baustoffeigenschaften herbeigeführt. Desweiteren wird weniger Photokatalysator benötigt, um eine gleichbleibende photokatalytische Wirkung bereitzustellen.

## Beschreibung

Die vorliegende Erfindung betrifft eine trockene Baustoffmischung. Insbesondere betrifft die vorliegende Erfindung eine trockene Baustoffmischung, die als funktionaler Zusatz für Mörtelmischungen und Betonmischungen verwendet werden kann.

In der Technik sind vielfältige Arten von Baustoffen bekannt. Zur Erstellung von Bauvorhaben wird insbesondere auf formbare Baustoffe wie Mörtel und Beton zugegriffen.

Beton wird gebildet aus Bindemittel, zum Beispiel Zement, aus Wasser und Körnungen sowie ggf. aus weiteren Zusätzen zur Beeinflussung funktionaler Eigenschaften.

Die Anforderungen an Baustoffe und die Bestandteile dieser Baustoffe sind vielfältig und je nach Anwendung verschieden. Einerseits soll bei der Herstellung eines Betons ein Werkstoff mit möglichst hoher Güte entstehen, andererseits sollen oft Zusatzanforderungen wie ästhetisches Erscheinungsbild oder besondere funktionale Mehrwerte erreicht werden. Entsprechend existieren Betonzusatzmittel oder Betonzusatzstoffe, welche Eigenschaften des Frischbetons (zum Beispiel Verarbeitbarkeit und Verarbeitungsdauer) oder/und auch des erhärteten Betons (zum Beispiel Beständigkeit) verbessern. Derartige Zusatzmittel und Zusatzstoffe sind so einzusetzen, dass nicht nur die gewünschte Eigenschaft verbessert wird sondern auch andere relevante Eigenschaften nicht unzulässig stark verschlechtert werden.

Ein bekannter Zusatzstoff für Beton besteht in photokatalytischen Materialien, wie zum Beispiel Titandioxid (TiO₂).

Derartige Photokatalysatoren können unter Einwirkung von elektromagnetischer Strahlung, insbesondere von UV-Strahlung und sichtbarem Licht den Abbau organischer Verbindungen begünstigen, sobald diese Verbindungen in Kontakt mit dem Beton gelangen. Außerdem können sie auch zur Reduzierung von anorganischen Luftschadstoffen, wie Stickoxiden und Sulfoxiden beitragen.

Beispielhaft sind hier als Photokatalysatoren die unter der Markenbezeichnung "KRONOClean" vermarkteten Photokatalysatoren der Firma KRONOS zu nennen.

Diese Photokatalysatoren werden aus verarbeitungstechnischen Gründen vorzugsweise als wässrige Zubereitung eingesetzt und können bei Zubereitung des Frischbetons beigegeben werden.

Aus der Anmeldung WO 98/05601 ist es bekannt, hydraulische Bindemittel mit Photokatalysatorpartikeln zu mischen und als Baustoffmischung zur Verfügung zu stellen. Aus der WO 2009/080647 ist bekannt, dass die Photokatalysatorbestandteile auf Trägerpartikeln, zum Beispiel Metakaolinträgern aufgebracht sein können.

Es ist Aufgabe der Erfindung, eine Baustoffmischung zur Verfügung zu stellen, welche den Bedarf an photokatalytischem Material bei dem Einsatz der Baustoffmischung verringert, ohne die photokatalytische Aktivität des entstehenden Materials wesentlich zu verschlechtern. Es soll also eine hohe photokatalytische Effizienz bei gleichzeitiger Reduzierung des photokatalytischen Materials und gleichzeitiger Verbesserung der betontechnischen Eigenschaften erreicht werden.

Es ist weiterhin Aufgabe der Erfindung, Betonprodukte mit photokatalytischen Eigenschaften mit einem verringerten Einsatz an photokatalytisch aktiver Substanz bereitzustellen.

Diese Aufgabe wird gelöst durch eine Baustoffmischung mit den Merkmalen des Patentanspruchs 1.

Diese Aufgabe wird weiterhin gelöst durch das Herstellungsverfahren gemäß Patentanspruch 10 sowie die Verwendung der Baustoffmischung gemäß Patentanspruch 15 und eine Baustoffmischung, welche nach den Vorgaben des Herstellungsanspruches 20 erstellt wurde.

Erfindungsgemäß weist die Baustoffmischung einen puzzolanischen Träger mit gerundeter oder kugeliger Kornform auf. Dieser Träger ist gemischt mit einem feinteiligen Photokatalysator.

Die mittlere Korngröße des Trägers liegt zwischen 0.1 µm und 1 mm. Die Mischung von Träger und Photokatalysator liegt derart vor, dass auf dem Träger ein Anteil des feinkörnigen photokatalytischen Materials aufgebracht ist. Die feinen, kleineren Photokatalysatorpartikel liegen also wenigstens teilweise auf der Oberfläche der größeren Trägerpartikel vor.

Puzzolanische Materialien sind als Betonzusatzstoffe grundsätzlich bekannt. Aufgrund ihrer chemischen Zusammensetzung sind sie in Verbindung mit Wasser und einem alkalischen Bindemittel bindefähig und werden als Zusatzstoffe für die Herstellung von Mörtel oder Beton verwendet.

Üblicherweise sind natürliche Puzzolane, wie zum Beispiel auch das vorstehende Metakaolin, Substanzen mit scharfkantiger Körnung. Es existieren jedoch auch künstliche Puzzolane, wie zum Beispiel Flugaschen, welche eine deutlich gleichmäßigere, insbesondere gerundete oder kugelige Kornform aufweisen.

Obwohl die Verwendung von Flugasche als Betonzusatzstoff bekannt ist, hat sich überraschend gezeigt, dass die Herstellung einer Trockenmischung aus einem puzzolanischen Träger mit gerundeter oder kugeliger Kornform und einem photokatalytischen Material und die Hinzufügung dieser Trockenmischung bei der Herstellung von Beton die photokatalytische Effektivität deutlich erhöht.

Das photokatalytische Material ist vorzugsweise feinteilig mit primären Partikelgrößen von 2 nm bis 100 nm und sekundären Partikelgrößen(Agglomerate) von einigen 100 nm bis über 1 µm.

Wird also zunächst der puzzolanische gerundete oder kugelige Träger mit dem photokatalytischen Material derart zusammengebracht, dass das photokatalytische Material wenigstens teilweise auf der Oberfläche des Trägers verteilt vorliegt, so ist die Wirkung des photokatalytischen Materials bei späterer Hinzufügung zu einer Bindemittelmischung verbessert. Es wird gegenüber den bekannten Verfahren weniger photokatalytisches Material benötigt, um eine gleiche oder höhere photokatalytische Wirksamkeit als im Stand der Technik zu erreichen.

Durch diese Erstellung einer Trockenmischung wird ein Hybrid-Photokatalysator geschaffen, welcher Vorteile in der photokatalytischen Aktivität und der Wirkung bei sonstigen Baustoffeigenschaften verbindet.

Eine entsprechende Verbindung oder Verteilung des gerundeten oder kugeligen puzzolanischen Trägers und des photokatalytischen Materials kann insbesondere mit einem Intensivtrockenmischer (beispielsweise von Eirich, Lödige oder Henschel) erreicht werden. Bei dem Zusammenbringen dieser beiden Bestandteile legen sich die deutlich kleineren Photokatalysatorpartikel auf das gerundete oder kugelige Trägermaterial. Das resultierende Material lässt sich als haltbare Trockenmischung einfach und zielsicher bei der weiteren Verarbeitung einsetzen.

Bei Einsatz dieser Mischung tritt das Trägermaterial selbst in eine puzzolane Reaktion mit dem eingesetzten Bindemittel ein und erzeugt eine verbesserte Verarbeitbarkeit und somit Festigkeitssteigerungen was zu verbesserten Betoneigenschaften führt. Andererseits sind die auf den Trägerpartikeln verteilten und zwischen den Partikeln gemischt vorliegenden Photokatalysatorpartikel in der späteren Bindemittelmischung besser dispergiert und wirksamer. Diese Betrachtungen allein können die überraschende Wirksamkeitssteigerung allerdings nicht gänzlich erklären. Möglicherweise tritt noch ein weiterer Synergieeffekt auf, bei dem das Trägermaterial später als Adsorbens für Schadstoffe wirkt, die auch nach Abbinden des Betons auf den auf den Trägermaterialkörnern angeordneten photokatalytischen Zentren abreagieren.

Möglicherweise wird auch durch die gerundete oder kugelige Kornform eine geänderte Porenstruktur, insbesondere an den photokatalytisch reaktiven Betonoberflächen erreicht, welche die Abbauraten positiv beeinflusst.

Die erfindungsgemäße Baustoffmischung ist nicht nur photokatalytisch effektiver, leistet also bei geringerem Photokatalysatoreinsatz mindestens gleichwertige Abbauraten wie im Stand der Technik, sondern auch baustofftechnologisch gleichgut oder besser als die entsprechenden Zementmischungen gemäß dem Stand der Technik. Des Weiteren verbessert die runde Kornform der Trägermaterialien die Verarbeitung einer Beton- oder Zementmischung, ermöglicht damit ggf. Wassereinsparungen und ein geringeres Porenvolumen sowie eine höhere Festigkeit.

Feine Zusatzstoffe, wie der Photokatalysator, erhöhen zwar wiederum den Wasseranspruch eines Betons und können die Verarbeitbarkeit negativ beeinflussen, andererseits kann dies auch die Festigkeit wegen besserer Porenausfüllung verbessern.

Die erfindungsgemäße Kombination des gerundeten oder kugeligen Trägermaterials mit darauf teilweise verteilten photokatalytischen Materialien erlaubt die Ausschöpfung beider Vorteile durch eine differenzierte Einstellung und Optimierung von Porengehalt, Porengröße, Verarbeitungsverhalten und Festigkeit des resultierenden Betons.

Die Erfindung erlaubt also die Optimierung und Kostenreduzierung bzgl. photokatalytischer Effektivität und außerdem der baustofftechnologischen Eigenschaften.

Wesentlich bezüglich der Erfindung ist es, dass das photokatalytische Material und das Trägermaterial zusammengebracht werden und die Verteilung des photokatalytischen Materials auf dem Trägermaterial sowie die intensive Durchmischung von Photokatalysator und Träger erfolgt, bevor irgendwelche anderen weiteren Zusatzstoffe hinzugefügt werden. Nur auf diese Weise kann die Erfindung ihre vorteilhafte Wirkung entfalten.

Die erfindungsgemäße Partikelgröße des Bindemittels kann grundsätzlich einen weiten Bereich überstreichen, zwischen der Größe der Primärpartikel des Photokatalysators und dem Trägermaterial liegen jedoch mindestens ein bis drei Größenordnungen.

In einer bevorzugten Ausführungsform enthält der feinteilige Photokatalysator Titandioxid, vorzugsweise in Anatasform. Titandioxid ist ein bekannter Photokatalysator, welcher für die Ausführung der Erfindung hervorragend geeignet ist. Auf Basis von Titandioxid werden verschiedene am Markt befindliche Photokatalysatorprodukte angeboten, die sich teils signifikant in ihrer Gestaltung und Wirksamkeit unterscheiden. Beispielsweise gibt es Produkte mit optimierter wirksamer Oberfläche, bei denen Agglomerate von Titandioxid vorliegen. Außerdem gibt es Modifikationen von Titandioxid-photokatalysatoren die nicht nur bei Aktivierung mit UV-Strahlung, sondern auch mit Strahlungen im Bereich des sichtbaren Lichtes effizient zur Schadstoffreduzierung beitragen (Beispiel KRONO*Clean* 7000).

Regelmäßig sind die Abmessungen von Photokatalysatorpartikel-Agglomeraten im Bereich von bis zu einigen 100 nm bis über 1 µm zu finden, während die Primärpartikelgröße im Bereich von 2 nm bis 100 nm liegt.

Vorteilhaft ist die Verwendung des konkreten Photokatalysators Titandioxid da bereits eine weitreichende Erprobung und Bekanntheit des Produktes sowie Verfügbarkeit in verschiedensten Verwendungsformen vorhanden ist.

Die Erfindung kann mit sämtlichen verfügbaren feinteiligen Produktgestaltungen von Titandioxid angewandt werden, wobei feinteilig in diesem Zusammenhang als Mischung mit einer mittleren Primärpartikelgröße von 2 nm bis 100 nm mit ggf. größeren Agglomeraten zu verstehen ist.

In einer weiteren bevorzugten Ausführungsform der erfindungsgemäßen Baustoffmischung besteht der Träger mit kugeligem oder gerundetem Korn aus Flugasche.

Flugasche ist ein bekannter genormter Zusatzstoff für Baustoffe (DIN EN 450) und entsteht bei Verbrennungsprozessen, insbesondere im Bereich der Energieerzeugung in mit Steinkohle befeuerten Kraftwerken.

Es ist bekannt, dass die Flugaschepartikel regelmäßig kugelig, teilweise auch als Hohlkorn auftreten. Die Zusammensetzung der Flugasche ist abhängig von den eingesetzten Kohlen und den zugrundeliegenden Verbrennungsprozessen.

Flugasche bietet sich aufgrund der entstehungsbedingten Kornform ideal als Material für die Trägerfunktion der erfindungsgemäßen Baustoffmischung an. Im Übrigen fällt Flugasche bei Verbrennungsprozessen an und kann erfindungsgemäß in eine vorteilhafte Verwendung überführt werden.

Gemäß dieser Ausführungsform wird ein bei Verbrennungsprozessen, insbesondere Energieerzeugungsprozessen anfallender Stoff, zusammen mit einem knappen und teuren Rohstoff (dem Photokatalysator) zu einer optimierten Baustoffmischung verarbeitet, welche die vorteilhaften Eigenschaften beider Ausgangsstoffe verbindet und verbessert. Die Flugasche ist als puzzolanisches Material und mit ihrer kugeligen Kornform und Kornverteilung einer verbesserten Baustoffeigenschaft hinsichtlich Festigkeit und Porenverteilung zuträglich. Andererseits trägt sie als Träger für den Photokatalysator dazu bei, den Bedarf an photokatalytischem Material bei gleichbleibender Photokatalyseeffizienz zu verbessern.

In einer Weiterbildung der Erfindung enthält die Baustoffmischung neben den vorgenannten Materialien des feinteiligen Photokatalysators und des Trägermaterials mit kugeliger oder gerundeter Kornform außerdem zusätzliche Füllstoffe. Diese Füllstoffe weisen insbesondere eine abweichende Kornform von derjenigen des Trägermaterials auf und können scharfkantige bis angerundete Kornformen haben. Solche Füllstoffe können insbesondere als Rieselhilfe dienen und sind bei der Zugabe der Baustoffmischung im Zuge der weiteren Verarbeitung den Materialeigenschaften zuträglich. Grundsätzlich können auch diese Füllstoffe weitere funktionale Eigenschaften aufweisen, z.B. puzzolanisch wirken.

Als derartige Füllstoffe kommen beliebige Füllstoffe, wie zum Beispiel auch Trassmehl, Kalksteinmehl, Basaltmehl, Hüttensand, Aerosile oder auch andere Substanzen in Frage. Der Massenanteil dieser Füllstoffe mit abweichender Kornform ist jedoch immer geringer als der Anteil des Trägers mit kugeliger oder gerundeter Kornform.

In einer Ausführungsform der Erfindung besteht die Trockenmischung ausschließlich aus Photokatalysator und dem Trägermaterial, enthält also keine weiteren Füllstoffe. In diesem Fall beträgt der Photokatalysatoranteil 5 % bis 50 %, vorzugsweise 15 % bis 35 %, wobei auf Massenanteile Bezug genommen wird.

In empirischen Versuchen hat sich gezeigt, dass bei den genannten Gewichtsanteilen die erfindungsgemäße Baustoffmischung ihre vorteilhafte Wirkung besonders entfaltet. Gemäß dieser Ausführungsform ist der Anteil des Trägermaterials mindestens ebenso groß wie der des Photokatalysators, bevorzugt jedoch größer.

Dies gewährleistet, dass genügend Trägeroberfläche für die Verteilung des Photokatalysators vorhanden ist und andererseits eine ausreichende Trennung des Photokatalysatoranteils durch das Trägermaterial gewährleistet ist.

Eine Variation der Anteilsverhältnisse wird der Fachmann im Rahmen der Erfindung vornehmen, je nachdem welche primären Ziele er mit der erfindungsgemäßen Baustoffmischung verfolgt. Wird beispielsweise die vorteilhafte Wirkung des Trägermaterials als puzzolanischer Bestandteil betont, so kann ein höherer Anteil an Trägermaterial gewählt werden. Eine Optimierung ist je nach Anforderungen durch die einschlägig bekannten und routinemäßig durchzuführenden Verfahren und Experimente möglich.

Vorzugsweise ist bei der erfindungsgemäßen Baustoffmischung die mittlere Korngröße des Trägers kleiner als 400 µm, besonders bevorzugt kleiner als 200 µm und insbesondere kleiner als 50 µm.

Eine Verkleinerung der Korngröße des Trägermaterials ermöglicht eine noch bessere Vermischung von Träger und Photokatalysator und Verteilung des Photokatalysators auf der Oberfläche der Trägersubstanz.

Die Erfindung wird nun anhand der beiliegenden Figuren näher erläutert.

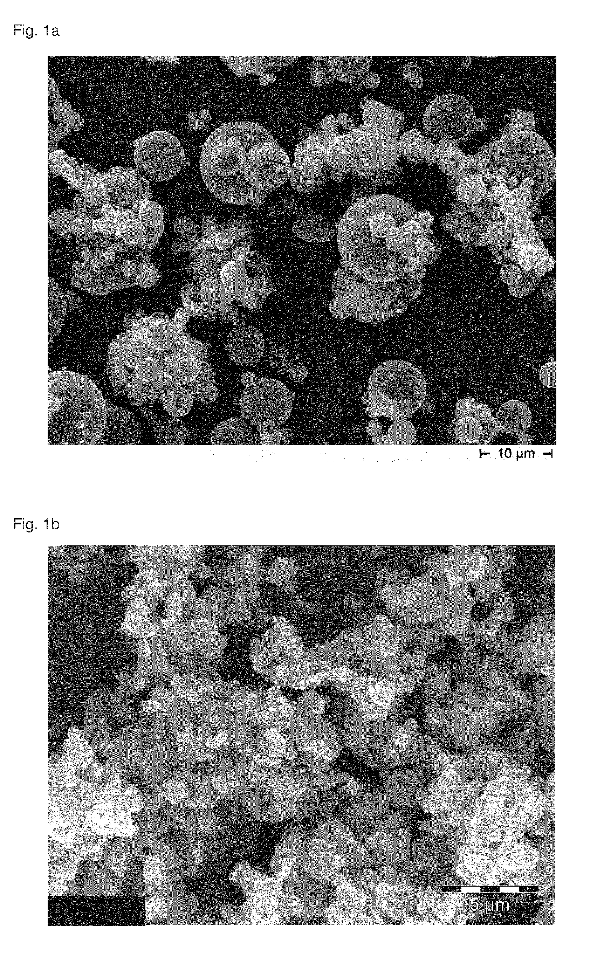

Figur 1a zeigt eine mit einem Elektronenmikroskop aufgenommene Darstellung von Flugaschekörnen (steament H4). Es ist deutlich die kugelige Kornform der Flugasche zu erkennen, sowie die Verteilung der Korngrößen, welche etwa 1 bis 2 Größenordnungen überstreicht.

Figur 1b zeigt eine Aufnahme von einem feinteiligen Titandioxid-Photokatalysator (KRONO*Clean* 7000), wobei auf den Maßstab zur Beurteilung der Korngrößen zu achten ist. Der Photokatalysator liegt insbesondere in Form von Agglomeraten vor.

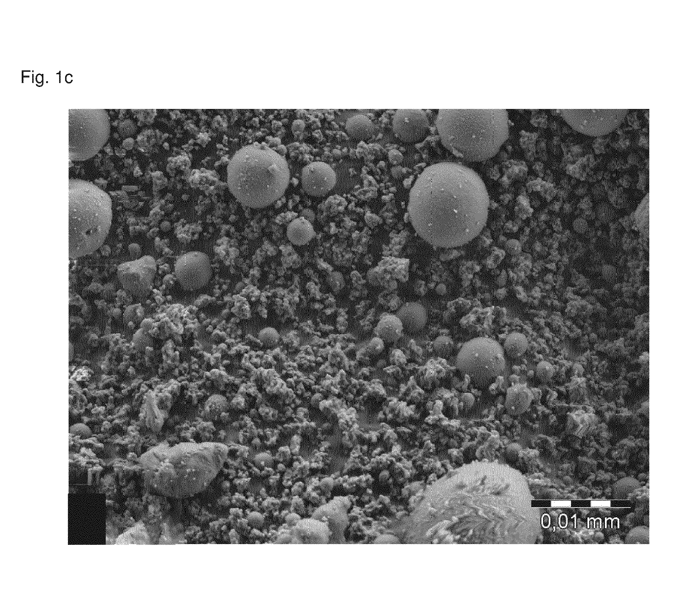

Figur 1c zeigt die Mischung aus Titandioxid-Photokatalysator (KRONO*Clean* 7000, 1 Masseteil)und Trägermaterial (Flugasche steament H4,3 Masseteile), wobei zu erkennen ist, dass Trägermaterial und Photokatalysator in gut durchmischter Weise vorliegen. In der Mischung gemäß diesem Ausführungsbeispiel der Erfindung liegt also einerseits durch den Mischprozess der Komponenten die Photokatalysatorkomponente besser dispergiert vor, wie ein Vergleich mit der Abbildung 1b unmittelbar zeigt. Andererseits erfolgt eine Verteilung dieser kleineren Partikel auf den Oberflächen der größeren Flugaschepartikel. Auf der Oberfläche von Trägermaterialkörnern sind Photokatalysatorkörnungen angelagert, wobei insbesondere die kleinteiligen Bestandteile der Photokatalysatormischung auf der Oberfläche der Trägermaterialien angelagert sind. Die größeren Agglomerate liegen teilweise weiterhin von dem Trägermaterial separiert vor. Die gezeigte Durchmischung ist in trockenem Mischverfahren mit einem Intensivtrockenmischer der Fa. Henschel erfolgt.

Der Grund für die in den Versuchen belegte Steigerung der Effizienz der photokatalytischen Aktivität bei geringerem Einsatz von photokatalytischem Material ist anhand dieser Aufnahmen nicht zu klären. Allerdings zeigt sich, dass möglicherweise aus kleineren Bestandteile der Photokatalysatormischung durch Anlagerung auf den kugeligen Trägerkörnen aus dem Träger selbst eine Art photokatalytisch aktives Korn gebildet wird. Andererseits sorgen die Körner des Trägers mit ihrer kugeligen oder gerundeten Form dafür, dass eine gute Durchmischung und eine sehr gute Verteilung der Substanzen untereinander vorliegt, was beim späteren Einsatz zum Tragen kommt.

Die gezeigte Trockenmischung aus Flugasche und Photokatalysator, hier Titandioxid, erfolgt gemäß dieser Ausführungsform in einem Intensivtrockenmischer, wobei die hier gezeigte Mischung etwa 5 Minuten intensiv gemischt wurde. Das Verhältnis von Flugasche zu Photokatalysator wird je nach Anwendungsfall bestimmt. Insbesondere ergibt sich ein sinnvolles Mischungsverhältnis aus dem ermittelten Wert des Wasseranspruchs gemäß dem Verfahren nach Puntke und dem ermittelten Ausbreitmaß im Mörtelversuch (DIN EN 196).

Das Verfahren gemäß Puntke zur Ermittlung der dichtesten Packung ist in den Kreisen der Fachleute, insbesondere zum Beispiel in den DAfStB Richtlinien über selbstverdichtenden Beton erläutert. Dieses Verfahren basiert darauf, dass sich feinkörniges Haufwerk durch leichte Stöße bis zu einer stoffspezifischen Packungsdichte reproduzierbar verdichten lässt, wenn der Wassergehalt zur Sättigung des dichten Korngefüges ausreicht. Durch schrittweise Steigerung des Wassergehaltes wird der Übergangspunkt von "noch nicht verdichtbar" zu "gerade verdichtbar" ermittelt. Anschließend wird durch Rückwägung der Wassergehalt der Probe bestimmt und der Wasseranspruch berechnet.

Ein derart ermitteltes Massenverhältnis wird einem Mörteltest unterzogen, wobei für eine eingesetzte Menge des Gemisches von 25 % des Zementes ein gleichbleibendes Ausbreitmaß gegenüber dem Einsatz von 100 % Zement gezeigt werden soll. Ist dies nicht der Fall, kann das Verhältnis von Flugasche zu Photokatalysator weiter verändert werden.

Die nachfolgende Tabelle zeigt als charakteristisches Maß für die Verarbeitbarkeit einer Baustoffzubereitung das Ausbreitmaß (Mörteltest nach DIN EN 196) für verschiedene Zusammensetzungen:

**Tabelle 1**

| | |
|---|---|
| Mörteltest nach DIN EN 196 | |

| Zusammensetzung | Ausbreitmaß |
|---|---|
| 1) enthält Anteil von Zement (CEM I 42,5R), der als 100 M% Zement definiert wird | 164 mm |
| 2) enthält bezogen auf 1) 75 M% Zement und 25 M% Flugasche (steament H4) | 173 mm |
| 3) enthält bezogen auf 1) 75 M% Zement und Mischung aus weiteren 18,8 M% Zement mit 6,2 M% Photokatalysator (KRONO*Clean* 7000) | 135 mm |
| 4) mit erfindungsgemäßer Baustoffmischung, enthält bezogen auf 1) 75 M% Zement und Mischung aus 18,8 M% Flugasche (steament H4) und 6,2 M% Photokatalysator (KRONO*Clean* 7000) | 165 mm |

In Beispiel 1) der Tabelle 1 wurde als Bindemittel ausschließlich Zement eingesetzt. Der Zementanteil dieser Mischung wird für die übrigen Beispiele zu 100 M% definiert. Das Ausbreitmaß gibt an, wie fließfähig und verarbeitbar eine solche Mischung ist. Der hier ermittelte Wert kann als Vergleichswert für die übrigen Beispiele herangezogen werden.

In Beispiel 2) der Tabelle 1 wurden Flugasche und Zement in einem Masseverhältnis von 25:75 gemischt. Die Flugasche vergrößert das Ausbreitmaß, macht die Mörtelmischung also besser pumpbar und verarbeitbar.

In Beispiel 3) der Tabelle 1 wurde eine Vormischung von 3 Masseteilen Zement und 1 Masseteil Titandioxid-Photokatalysator hergestellt und diese Mischung anschließend mit Zement im Masseverhältnis von 25:75 gemischt. Das Ausbreitmaß ist signifikant gegenüber dem Beispiel 1) aus Tabelle 1 reduziert, was auf die feinteilige Photokatalysatormischung zurückzuführen ist. Damit der Zement eine photokatalytische Wirkung erhält, ist in diesem Fall also eine deutliche Verschlechterung des Ausbreitmaßes und damit der Verarbeitbarkeit in Kauf zu nehmen.

In dem erfindungsgemäßen Beispiel 4) wurde 1 Masseteil Photokatalysator mit Flugasche im Masseverhältnis 1:3 in einem Intensivtrockenmischer der Fa. Eirich für 5 Minuten gemischt und anschließend wurde diese erfindungsgemäße Baustoffmischung mit Zement im Masseverhältnis 25:75 gemischt. Das Ausbreitmaß ist trotz der Bereitstellung von photokatalytischen Eigenschaften, welche die von Beispiel 3) sogar übertreffen, ebenso gut verarbeitbar wie die Mischung nach Beispiel 1). Erfindungsgemäß wird also bei gleichbleibender oder sogar verbesserter Verarbeitbarkeit ein Baustoff mit einem effektiven Mehrwert der Schadstoffreduzierung geschaffen.

Für die Qualität der resultierenden Bauteile, insbesondere für die Oberflächenqualität ist außerdem maßgeblich, welche Packungsdichte mit den jeweiligen Baustoffen erzielbar ist. Dafür kann für die Ausgangsmaterialien eine Bestimmung der dichtesten Packung ermittelt werden:

**Tabelle 2**

| | |
|---|---|
| Bestimmung der dichtesten Packung nach Puntke | |

| Zusammensetzung | V% nach Puntke |
|---|---|
| 1) Zement (CEM I 42,5R) | 49, 8 |
| 2) Zement (CEM I 42,5R) mit Photokatalysator (KRONO*Clean* 7000) im Massenverhältnis 3:1 | 55,2 |
| 3) Flugasche (steament H4) | 35,5 |
| 4) erfindungsgemäße Baustoffmischung, enthaltend Flugasche (steament H4) und Photokatalysator (KRONO*Clean* 7000) im Massenverhältnis 3:1 | 40,0 |
| 5) Kalksteinmehl | 39,5 |
| 6) Kalksteinmehl und Photokatalysator (KRONO*Clean* 7000) im Massenverhältnis 3:1 | 55, 8 |
| 7) Basaltmehl | 42,3 |
| 8) Basaltmehl und Photokatalysator (KRONO*Clean* 7000) im Massenverhältnis 3:1 | 63, 8 |

Wie die Tabelle 2 zeigt, ist die erfindungsgemäße Mischung aus Flugasche und Photokatalysator gemäß Beispiel 4) der Tabelle 2 äußert dicht zu packen. Der V%-Wert liegt bei dem Wert, den üblicherweise Gesteinsmehle aufweisen.

Diese Beispiele zeigen, dass eine Mischung z.B. gemäß 6) oder 8) aus Tabelle 2 wesentlich schlechter zu verdichten ist. Dies ist der Tatsache geschuldet, dass die Gesteinsmehle mit der kantigen Kornform keine vergleichbare Packung erlauben wie die kugelige oder gerundete Flugasche.

Die erfindungsgemäße Mischung verbessert demnach gegenüber Mischungen aus Gesteinskörnungen (z.B. auch Metakaolin) und Photokatalysator die resultierenden Baustoffeigenschaften auch in dieser Beziehung gegenüber bekannten photokatalytischen Baustoffen. Dichtere Oberflächen bedeuten geringere Angriffsmöglichkeiten für betonschädigende Stoffe.

Die photokatalytische Wirksamkeit bezüglich des NO-Abbaus wurde in Anlehnung an ISO 22197-1 an den ausgehärteten Prüfkörpern geprüft. Die Prüfkörper wurden nach DIN EN 196 mit einem Zuschlag/Bindemittel-Verhältnis von 3:1 hergestellt. Unter den Masseanteil "Bindemittelanteil" wurden auch die Masseanteile Flugasche und/oder Photokatalysator mitgerechnet. Die Ergebnisse der Messung des NO-Abbaus zeigt die folgende Tabelle: NO-Abbau

**Tabelle 3**

| Zusammensetzung | NO-Abbau in % |
|---|---|
| 1) enthält Anteil von Zement (CEM I 42,5 R), der als 100 M% Zement definiert wird | 0,9 |
| 2) enthält bezogen auf 1) 75 M% Zement und 25 M% Flugasche (steament H4) | 1,3 |
| 3) enthält bezogen auf 1) 75 M% Zement und weitere 18,8 M% Zement mit 6,2 M% Photokatalysator (KRONO*Clean* 7000) gemischt | 10,0 |
| 4) mit erfindungsgemäßer Baustoffmischung, enthält bezogen auf 1) 75 M% Zement und 18,8 M% Flugasche (steament H4) und 6,2 M% Photokatalysator (KRONO*Clean* 7000) | 11,6 |

Es zeigt sich, dass bei Einsatz der erfindungsgemäßen Baustoffmischung, Beispiel 4) der Tabelle 3, eine erhöhte photokatalytische Wirksamkeit auftritt im Vergleich zu der Mischung, welche die gleiche Menge Photokatalysator enthält, allerdings ausschließlich in Zement dispergiert, siehe Beispiel 3) der Tabelle 3. Gleichzeitig weist ein mit der erfindungsgemäßen Baustoffmischung hergestellter Frischbeton gemäß obiger Darstellung gleich gute oder verbesserte betontechnische Eigenschaften auf im Vergleich zu dem mit reinem Zement, mit Zement und Photokatalysator oder mit Zement und Flugasche hergestellten Beton (siehe Tabelle 1).

Die erfindungsgemäße Baustoffmischung bietet einen weiteren Vorteil bei der Verwendung von farblich inhomogenen Trägermaterialien. Beispielsweise führt der Einsatz von Flugasche in Beton bekanntlich zu farblich inhomogenen Oberflächen, so dass solche Zusammensetzungen zur Herstellung von Sichtbetonflächen ungeeignet sind. Der Zusatz von Titandioxid-Photokatalysator führt zu einer Nivellierung der Farbinhomogenitäten, so dass die erfindungsgemäßen Baustoffmischungen mit Flugasche insbesondere für die Herstellung von Sichtbetonoberflächen, Betonfertigteilen, Pflastersteinen etc. sowie von Innen und Außenputzen besonders geeignet sind.

Insbesondere kann die erfindungsgemäße Baustoffmischung bei der Herstellung von Betonwaren, beispielsweise Betonpflastersteine verwendet werden. Oft werden heutzutage bei Betonpflastersteinen zwei Schichtsysteme zum Einsatz gebracht, wobei ein Kernbeton von einem Vorsatzbeton bedeckt wird, welcher in Kontakt mit der Umgebung gerät. In diesem Fall kommt der photokatalytische Betonzusatzstoff in der erfindungsgemäßen Baustoffmischung nur im Vorsatzbeton zum Einsatz, da nur dort Kontakt zur Umgebung besteht. Außerdem kann die Erfindung jedoch in zahlreichen anderen Baustoffen, z.B. Innen- und Außenputzen, Betonfertigteilen oder anderen Betonoberflächen eingesetzt werden.

## Patentansprüche

**1.** Photokatalytische Baustoffmischung,
**dadurch gekennzeichnet,**
**dass** sie eine Trockenmischung aus einem feinteiligen Photokatalysator und einem puzzolanischen Träger mit kugeliger oder gerundeter Kornform einer Korngröße zwischen 0.1 µm und 1 mm enthält,
wobei der Photokatalysator wenigstens teilweise auf der Oberfläche des Trägers verteilt vorliegt.

**2.** Baustoffmischung nach Anspruch 1, wobei der feinteilige Photokatalysator Titandioxid enthält, vorzugsweise in Anatasform.

**3.** Baustoffmischung nach Anspruch 1 oder 2, wobei der Träger aus Flugasche besteht.

**4.** Baustoffmischung nach einem der vorangehenden Ansprüche, wobei die Trockenmischung zusätzlich einen Füllstoff mit abweichender Kornform enthält, insbesondere mit scharfkantiger bis angerundeter Kornform.

**5.** Baustoffmischung nach einem der Ansprüche 1 bis 3, wobei die Trockenmischung ausschließlich aus dem Photokatalysator und dem Träger besteht, mit einem Photokatalysator-Anteil von 5 % bis 50 %, bevorzugt 15 % bis 35 %.

**7.** Baustoffmischung nach einem der vorangehenden Ansprüche, wobei die mittlere Korngröße des Trägers kleiner als 400 µm, vorzugsweise kleiner als 200 µm und besonders bevorzugt kleiner als 50 µm ist.

**8.** Verfahren zur Herstellung einer photokatalytischen Baustoffmischung, aufweisend die Schritte:
Erstellen einer Trockenmischung aus einem feinteiligen Photokatalysator und einem puzzolanischen Träger mit kugeliger oder gerundeter Kornform einer Korngröße zwischen 0.1 µm und 1 mm, wobei
der Photokatalysator und der Träger mit einem Intensivmischers zu der Baustoffmischung verarbeitet werden.

**9.** Verfahren nach Anspruch 8, wobei als feinteiliger Photokatalysator Titandioxid verwendet wird, vorzugsweise in Anatasform.

**10.** Verfahren nach Anspruch 8 oder 9, wobei als Träger Flugasche verwendet wird.

**11.** Verfahren nach einem der Ansprüche 8 bis 10, wobei der Trockenmischung zusätzlich ein Füllstoff mit abweichender Kornform beigegeben wird, insbesondere ein Füllstoff mit scharfkantiger bis angerundeter Kornform.

**12.** Verfahren nach einem der Ansprüche 8 bis 11, wobei die Trockenmischung ausschließlich aus dem Photokatalysator und dem Träger gebildet wird, wobei ein Photokatalysator-Anteil von 5 % bis 50 %, bevorzugt 15 % bis 35 % eingehalten wird.

**13.** Verfahren nach einem der Ansprüche 8 bis 12, wobei eine Körnung des Trägers mit einer mittleren Korngröße des Trägers kleiner als 400 µm, vorzugsweise kleiner als 200 µm und besonders bevorzugt kleiner als 50 µm verwendet wird.

**14.** Betonbauteil welches eine Baustoffmischung gemäß einem der Patentansprüche 1 bis 7 enthält.

**15.** Betonbauteil nach Anspruch 14, wobei das Betonbauteil eine Vorsatzschicht aufweist, wobei die Baustoffmischung in der Vorsatzschicht enthalten ist.

**16.** Photokatalytische Baustoffmischung für Mörtel oder Beton, hergestellt durch die Schritte:
Erstellen einer Trockenmischung aus einem feinteiligen Photokatalysator und einem puzzolanischen Träger mit kugeliger oder gerundeter Kornform einer Korngröße zwischen 0.1 µm und 1 mm, wobei
der Photokatalysator und der Träger mit einem Intensivmischers zu der Baustoffmischung verarbeitet werden.

**17.** Photokatalytische Baustoffmischung nach Anspruch 16, wobei als feinteiliger Photokatalysator Titandioxid verwendet wird, vorzugsweise in Anatasform und wobei als Träger Flugasche verwendet wird.

**18.** Photokatalytische Baustoffmischung nach einem der Ansprüche 16 bis 17, wobei der Trockenmischung zusätzlich ein Füllstoff mit abweichender Kornform beigegeben wird, insbesondere ein Füllstoff mit scharfkantiger bis angerundeter Kornform.
